# EUROPÄISCHE PATENTSCHRIFT

(11) **EP 2 312 535 B1**
(45) Veröffentlichungstag und Bekanntmachung des Hinweises auf die Patenterteilung: **09.11.2011**
(21) Anmeldenummer: 09450196.2
(22) Anmeldetag: 15.10.2009
(51) Int. Cl.: G07B 15/00, G07F 7/10

(54) **Vorrichtung zur Personalisierung und Registrierung von Fahrzeuggeräten**
Device for personalising and registering vehicle devices
Dispositif de personnalisation et d'enregistrement d'appareils de véhicules

(43) Veröffentlichungstag der Anmeldung: 20.04.2011
(73) Patentinhaber: Kapsch TrafficCom AG, 1120 Wien (AT)
(72) Erfinder: Hafenscher, Albert, 1210 Wien (AT); Tijink, Jasja, 2380 Perchtoldsdorf (AT); Nagy, Oliver, 1190 Wien (AT)
(74) Vertreter: Weiser, Andreas

(56) Entgegenhaltungen:
- EP-A1- 1 870 302
- EP-A2- 1 081 658
- WO-A1-2006/050543
- DE-A1- 10 104 499

## Beschreibung

Die vorliegende Erfindung betrifft eine Vorrichtung zur Personalisierung und Registrierung von Fahrzeuggeräten unterschiedlicher Art in einem Straßenmautsystem.

Zum Betrieb von Fahrzeuggeräten ("onboard units", OBUs) unterschiedlicher Art, z.B. von verschiedenen Herstellern, im Rahmen ein und desselben Straßenmautsystems müssen die OBUs derzeit durch jeweils eine spezifische Vorrichtung für jede Fahrzeuggeräteart personalisiert und im System registriert werden. Bei dieser Personalisierung werden benutzer- bzw. nutzungsspezifische Personalisierungsdaten in die OBU eingeschrieben, z.B. Name des Benutzers, Kennzeichen oder Mautklasse des Fahrzeugs usw. Die genannte Registrierung einer OBU im Straßenmautsystem erfordert das Einspeisen dieser Personalisierungsdaten in eine Registrierungsdatenbank des Straßenmautsystems, in der Regel ergänzt um weitere Daten wie z.B. Adresse oder Bankkontonummer des Benutzers, technische Daten der OBU usw., welche weiteren Daten zusammen mit den Personalisierungsdaten hier als "Registrierungsdaten" bezeichnet werden. EP 1 870 302 beschreibt ein System zur Personalisierung einer OBU.

Bei der Verwendung verschiedenster artspezifischer Personalisierungs- und Registrierungsvorrichtungen besteht die Gefahr, daß aufgrund unterschiedlicher Herstellerumsetzungen von Schnittstellenstandards oder Fehlfunktionen in einzelnen Vorrichtungen Datenfehler auftreten, welche die Integrität der Registrierungsdatenbank des Straßenmautsystems beeinträchtigen können. Die Erfindung setzt sich zum Ziel, diese Nachteile zu überwinden und eine Personalisierungs- und Registrierungsvorrichtung für Fahrzeuggeräte unterschiedlicher Art zu schaffen, welche Störungen des Straßenmautsystems durch Fehlfunktionen einzelner Gerätearten ausschließt.

Dieses Ziel wird gemäß der Erfindung mit einer Vorrichtung der genannten Art erreicht, welche umfaßt:
je ein Personalisierungsmodul für jede Fahrzeuggeräteart, das dazu ausgebildet ist, Personalisierungsdaten in ein Fahrzeuggerät dieser Art zu schreiben und zugehörige Registrierungsdaten, welche die Personalisierungsdaten enthalten, zu erzeugen,
ein allen Personalisierungsmodulen gemeinsames Schnittstellenmodul, welches dazu ausgebildet ist, deren Registrierungsdaten zu empfangen und auf eine Freigabeaufforderung hin an eine Registrierungsdatenbank des Straßenmautsystems zu senden, und
eine Testeinrichtung, welche die Personalisierungsdaten eines personalisierten, noch nicht registrierten Fahrzeuggeräts ausliest, die vom zuständigen Personalisierungsmodul erzeugten Registrierungsdaten auf Übereinstimmung der darin enthaltenen Personalisierungsdaten mit den ausgelesenen Personalisierungsdaten hin überprüft und bei Übereinstimmung eine Freigabeaufforderung hinsichtlich dieser Registrierungsdaten an das Schnittstellenmodul erteilt.

Auf dieser Weise werden die Registrierungsdaten der einzelnen gerätespezifischen Personalisierungsmodule erst dann zur Einspeisung in das Zentralsystem freigegeben, wenn die in die OBU tatsächlich eingeschriebenen Personalisierungsdaten und die vom Personalisierungsmodul mit den Registrierungsdaten mitgelieferten Personalisierungsdaten übereinstimmen. Fehlfunktionen in den Personalisierungsmodulen oder den OBUs, welche zu Dateninkonsistenzen und damit zu einer Zerstörung der Integrität der Registrierungsdatenbank führen könnten, werden dadurch sicher verhindert.

Eine bevorzugte Ausführungsform der Erfindung zeichnet sich dadurch aus, daß jedes Personalisierungsmodul bei der Personalisierung eines Fahrzeuggeräts auch einen Hashwert der Registrierungsdaten erzeugt und in das Fahrzeuggerät einschreibt und die Testeinrichtung diesen Hashwert vom Fahrzeuggerät mit ausliest und bei der genannten Überprüfung mit einem Hashwert der vom Personalisierungsmodul empfangenen Registrierungsdaten vergleicht. Dadurch wird ein zusätzliches Validierungskriterium geschaffen, welches nicht nur die Personalisierungsdaten, sondern die gesamten Registrierungsdaten über den Weg der OBU und die Testeinrichtung gegenzuprüfen gestattet.

Bevorzugt ist in einer praktischen Ausführungsform die Vorrichtung ein PoS-Terminal (Point-of-Sale-Terminal) und die Personalisierungsmodule sind jeweils durch die Kombination aus einer fahrzeuggeräteartspezifischen Personalisierungsapplikation und einer fahrzeuggeräteartspezifischen Kommunikationsschnittstelle zum Fahrzeuggerät gebildet. Die Kommunikationsschnittstelle kann dabei insbesondere, eine DSRC- oder Mobilfunk-Schnittstelle sein.

Eine weitere bevorzugte Ausführungsform der Erfindung besteht darin, daß die Testeinrichtung dafür ausgebildet ist, zum Auslesen der Personalisierungsdaten das Fahrzeuggerät zur Erzeugung einer standardisierten Mauttransaktion des Straßenmautsystems zu veranlassen, welche die Personalisierungsdaten wiedergibt. Dadurch kann gleichzeitig die Funktionsfähigkeit der OBU überprüft und als Kriterium für die Freigabe der Einspeisung der Registrierungsdaten in das Zentralsystem verwendet werden.

Besonders günstig ist es, wenn die Testeinrichtung die Kommunikationsschnittstelle eines ausgewählten Personalisierungsmoduls mitverwendet. Bei diesem ausgewählten Personalisierungsmodul kann es sich beispielsweise um das proprietäre System des Betreibers der Registrierungsdatenbank handeln, welchem besonderes Vertrauen zuerkannt wird, sodaß eine auf dem Personalisierungsmodul eines Fremdherstellers personalisierte "Fremd"-OBU dann über die Kommunikationsschnittstelle des proprietären Personalisierungsmoduls validiert und registriert werden kann.

Alternativ kann vorgesehen werden, daß die Testeinrichtung zur Kommunikation mit den Fahrzeuggeräten eine Sendeempfangsbake des Straßenmautsystems verwendet, wodurch die Validierung und Freigabe der Registrierungsdaten z.B. beim ersten Kontakt einer OBU mit einer solchen Bake erfolgt.

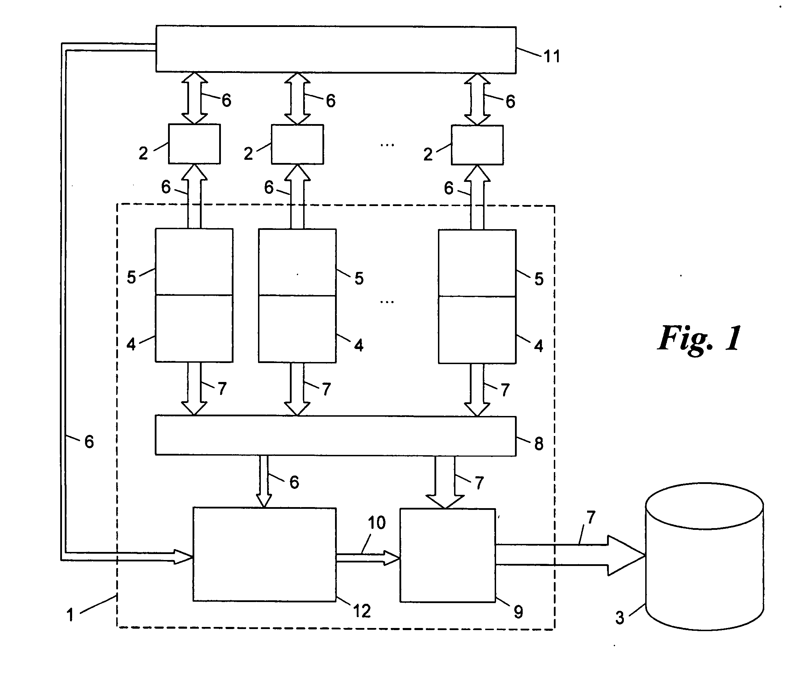

Die Erfindung wird nachstehend anhand eines in der beigeschlossenen Zeichnung dargestellten Ausführungsbeispiels näher erläutert, deren einzige Fig. 1 ein Blockschaltbild der erfindungsgemäßen Vorrichtung zeigt.

Fig. 1 zeigt eine Vorrichtung 1 zur Personalisierung von Fahrzeuggeräten bzw. OBUs 2 und Registrierung derselben in einer zentralen Registrierungsdatenbank 3 eines Straßenmautsystems. Die OBUs 2 können beliebiger Art sein, wobei unter "Art" hier sowohl eine bestimmte technische Konstruktion bzw. ein bestimmter technischer Standard als auch einfach nur ein bestimmter Hersteller für. OBUs ein und desselben technischen Standards verstanden wird.

Beispielsweise können die OBUs 2 "selbstlokalisierende" OBUs sein, d.h. die ihren Ort z.B. mittels eines Satellitennavigationsempfängers bestimmen und ihre Ortsaufzeichnungen ("tracks") oder daraus berechnete Mautgebühren an eine Zentrale absetzen, oder auch "infrastruktur-lokalisierte" OBUs, deren Ort z.B. von Videokameras, Laserscannern oder mittels DSRC- (dedicated short range communication) od.dgl. -Baken bestimmt und an die Zentrale des Mautsystems gemeldet wird.

Für jede Art von OBU 2 umfaßt die Vorrichtung 1 ein eigenes Personalisierungsmodul 4, 5 (hier drei gezeigt), welches sich aus einer artspezifischen (Software)-Personalisierungsapplikation 4 und einer artspezifischen (Hardware)-Kommunikationsschnittstelle 5 zur Kommunikation mit der jeweiligen OBU 2 zusammensetzt.

Die Kommunikationsschnittstelle 5 kann von beliebigem Typ sein. Bevorzugt ist sie von demselben Typ wie jene, über die die OBU 2 ihre Mauttransaktionen mit dem Straßenmautsystem abwickelt, z.B. eine Mobilfunk-Schnittstelle oder eine DSRC-, WAVE- (wireless access for vehicle environment), WLAN- (wireless local area network), WiMAX-, RFID- (radio frequency idenification) oder Infrarot-Schnittstelle usw.

Die Personalisierungsapplikation 4 nimmt bevorzugt Benutzereingaben von einer Bedienungsperson an einem Terminal entgegen, z.B. einem PoS-Terminal (Point of Sale Terminal), in welchem Fall die gesamte Vorrichtung 1 bevorzugt als ein einziges PoS-Terminal ausgebildet wird. Alternativ könnte die Personalisierungsapplikation 4 auch Daten aus einem Fernzugang enthalten, z.B. über das Internet oder von einer anderen Datenschnittstelle.

Auf Grundlage der in die Personalisierungsapplikation 4 eingegebenen bzw. in dieser empfangenen Daten führt jedes Personalisierungsmodul 4, 5 eine Personalisierung von OBUs 2 "seiner" Art durch, indem es Personalisierungsdaten 6, wie z.B. Name des Benutzers, Kennzeichen des Fahrzeugs, Kontonummer eines Mautgebührenabrechnungskontos in der Mautzentrale usw., in die OBU 2 einschreibt. Eine solche Personalisierung erfolgt beispielsweise bei der Erstauslieferung einer fabriksneuen OBU 2 an einen Benutzer oder bei der Neuzuordnung einer OBU 2 z.B. bei einem Benutzer- oder Fahrzeugwechsel.

Gleichzeitig erzeugt das Personalisierungsmodul 4, 5 auch zugehörige Registrierungsdaten 7 für die Registrierungsdatenbank 3 des Straßenmautsystems, welche die Personalisierungsdaten 6 sowie - falls gewünscht - auch zusätzliche Daten wie die Adresse des Benutzers, eine Bankkontoverbindung usw. enthalten.

Die Registrierungsdaten 7 werden von den Personalisierungsmodulen 4, 5 an ein gemeinsames Schnittstellenmodul 8, 9 übergeben, das sich aus einem Pufferspeicher 8 und einem - symbolisch zu verstehenden - steuerbaren Schalter 9 zusammensetzt: Das Schnittstellenmodul 8, 9 sendet empfangene Registrierungsdaten 7 nur dann an die Registrierungsdatenbank 3 weiter, wenn es eine Freigabeaufforderung 10 zur "Durchschaltung" des Schalters 9 erhält.

Die Freigabeaufforderung 10 wird von einer Testeinrichtung 11, 12 erteilt, welche sich aus einer Kommunikationseinrichtung 11 und einer Vergleichseinrichtung 12 zusammensetzt. Die Kommunikationseinrichtung 11 kann mit den OBUs 2 kommunizieren, um aus diesen die dort eingeschriebenen Personalisierungsdaten 6 auszulesen. Die Vergleichseinrichtung 12 vergleicht die aus einer OBU 2 ausgelesenen Personalisierungsdaten 6 mit den im Pufferspeicher 8 des Schnittstellenmoduls 8, 9 vom jeweiligen Personalisierungsmodul 4, 5 hinterlegten Registrierungsdaten 7, genauer mit den darin enthaltenen Personalisierungsdaten 6, und erteilt im Übereinstimmungsfalle die Freigabeaufforderung 10 an den Schalter 9 des Schnittstellenmoduls 8, 9, woraufhin dieses die betreffenden Registrierungsdaten 7 zur Einspeisung in die Registrierungsdatenbank 3 freigibt und zur weiteren Nutzung im Mautsystem bereitstellt.

Die Kommunikationseinrichtung 11 der Testeinrichtung 11, 12 kommuniziert mit den OBUs 2 bevorzugt auf dieselbe Weise, wie diese mit den Personalisierungsmodulen 4, 5 kommuniziert, was wiederum bevorzugt auch dieselbe Weise ist, mit welcher die OBUs 2 im laufenden Betrieb mit dem Straßenmautsystem kommunizieren, z.B. über eine Mobilfunk-Schnittstelle, eine DSRC-, WAVE-, WLAN-, WiMAX-, RFID- oder Infrarot-Schnittstelle usw. Auch ist es möglich, daß die Testeinrichtung 11, 12 die Kommunikationsschnittstelle 5 eines ausgewählten Personalisierungsmoduls 4, 5 mitverwendet, d.h. die Kommunikationseinrichtung 11 mit dieser Kommunikationsschnittstelle 5 zusammenfällt bzw. ident ist. Alternativ könnte die Kommunikationseinrichtung 11 auch durch eine Sendeempfangsbake des Straßenmautsystems gebildet werden, z.B. durch die erste Funkbake, welcher eine "frisch" personalisierte, noch nicht registrierte OBU 2 auf ihrem Weg nach Verlassen des PoS-Terminals begegnet.

Zum Auslesen der Personalisierungsdaten 6 aus den OBUs 2 kann die Testeinrichtung 11, 12 insbesondere auch eine standardisierte Mauttransaktion des Straßenmautsystems verwenden, welche nicht nur die Personalisierungsdaten 6 liefert, sondern gleichzeitig auch das standardkonforme Funktionieren der OBU 2 anzeigt. Auf diese Weise kann die Funktion der OBU 2 in das Kriterium für die Freigabe der Registrierungsdaten 7 miteinbezogen werden.

Eine zusätzliche Überprüfungsoption besteht in der Verwendung und Überprüfung von Hashwerten der Registrierungsinformation 7. Die Personalisierungsmodule 4, 5 können bei der Personalisierung einen Hashwert der Registrierungsdaten 7 erzeugen und diesen gemeinsam mit den Personalisierungsdaten 6 in die OBU 2 einschreiben. Die Testeinrichtung 11, 12 liest diesen Hashwert gemeinsam mit den Personalisierungsdaten 6 aus der OBU 2 aus und vergleicht den ausgelesenen Hashwert mit einem von den Personalisierungsmodulen 4, 5 gebildeten und zusammen mit den Registrierungsdaten 7 im Pufferspeicher 8 hinterlegten oder einem von der Testeinrichtung 11, 12 selbst aus den Registrierungsdaten 7 im Pufferspeicher 8 gebildeten Hashwert. Nur dann, wenn zu den Personalisierungsdaten 6 auch diese Hashwerte übereinstimmen, wird die Freigabeaufforderung 10 an das Schnittstellenmodul 8, 9 erteilt.

## Patentansprüche

1. Vorrichtung (1) zur Personalisierung und Registrierung von Fahrzeuggeräten (2) unterschiedlicher Art in einem Straßenmautsystem, **gekennzeichnet durch**:
je ein Personalisierungsmodul (4, 5) für jede Fahrzeuggeräteart, das dazu ausgebildet ist, Personalisierungsdaten (6) in ein Fahrzeuggerät (2) dieser Art zu schreiben und zugehörige Registrierungsdaten (7), welche die Personalisierungsdaten (6) enthalten, zu erzeugen,
ein allen Personalisierungsmodulen (4, 5) gemeinsames Schnittstellenmodul (8, 9), welches dazu ausgebildet ist, deren Registrierungsdaten (7) zu empfangen und auf eine Freigabeaufforderung (10) hin an eine Registrierungsdatenbank (3) des Straßenmautsystems zu senden, und
eine Testeinrichtung (11, 12), welche die Personalisierungsdaten (6) eines personalisierten, noch nicht registrierten Fahrzeuggeräts (2) ausliest, die vom zuständigen Personalisierungsmodul (4, 5) erzeugten Registrierungsdaten (7) auf Übereinstimmung der darin enthaltenen Personalisierungsdaten mit den ausgelesenen Personalisierungsdaten (6) hin überprüft und bei Übereinstimmung eine Freigabeaufforderung (10) hinsichtlich dieser Registrierungsdaten (7) an das Schnittstellenmodul (8, 9) erteilt.

2. Vorrichtung nach Anspruch 1, **dadurch gekennzeichnet, daß** jedes Personalisierungsmodul (4, 5) bei der Personalisierung eines Fahrzeuggeräts (2) auch einen Hashwert der Registrierungsdaten (7) erzeugt und in das Fahrzeuggerät (2) einschreibt und die Testeinrichtung (11, 12) diesen Hashwert vom Fahrzeuggerät (2) mit ausliest und bei der genannten Überprüfung (12) mit einem Hashwert der vom Personalisierungsmodul (4, 5) empfangenen Registrierungsdaten (7) vergleicht.

3. Vorrichtung nach Anspruch 1 oder 2, **dadurch gekennzeichnet, daß** die Vorrichtung (1) ein PoS-Terminal ist und die Personalisierungsmodule (4, 5) jeweils durch die Kombination aus einer fahrzeuggeräteartspezifischen Personalisierungsapplikation (4) und einer fahrzeuggeräteartspezifischen Kommunikationsschnittstelle (5) zum Fahrzeuggerät (2) gebildet sind.

4. Vorrichtung nach Anspruch 3, **dadurch gekennzeichnet, daß** die Kommunikationsschnittstelle (5) in an sich bekannter Weise eine DSRC- oder Mobilfunk-Schnittstelle ist.

5. Vorrichtung nach einem der Ansprüche 1 bis 4, **dadurch gekennzeichnet, daß** die Testeinrichtung (11, 12) dafür ausgebildet ist, zum Auslesen der Personalisierungsdaten (7) das Fahrzeuggerät (2) zur Erzeugung einer standardisierten Mauttransaktion des Straßenmautsystems zu veranlassen, welche die Personalisierungsdaten (6) wiedergibt.

6. Vorrichtung nach Anspruch 5 in Verbindung mit Anspruch 3 oder 4, **dadurch gekennzeichnet, daß** die Testeinrichtung (11, 12) die Kommunikationsschnittstelle (5) eines ausgewählten Personalisierungsmoduls (4, 5) mitverwendet.

7. Vorrichtung nach Anspruch 5 in Verbindung mit Anspruch 3, **dadurch gekennzeichnet, daß** die Testeinrichtung (11, 12) zur Kommunikation mit den Fahrzeuggeräten (2) eine Sendeempfangsbake (11) des Straßenmautsystems verwendet.

## Claims

1. Apparatus (1) for personalization and registration of vehicle devices (2) of different types in a road toll system, **characterized by**:
for each type of vehicle device, a respective personalization module (4, 5) that is configured to write personalization data (6) into a vehicle device (2) of this type and generate associated registration data (7), which contains the personalization data (6),
an interface module (8, 9) common to all personalization modules (4, 5) that is configured to receive their registration data (7) and, following a release request (10), send it to a registration database (3) of the road toll system, and
a testing unit (11, 12) that reads out the personalization data (6) of a personalized but not yet registered vehicle device (2), checks the registration data (7) generated by the responsible personalization module (4, 5) for agreement of the personalization data contained therein with the read-out personalization data (6), and in case of agreement, sends a release request (10) with respect to this registration data (7) to the interface module (8, 9).

2. Apparatus according to claim 1, **characterized in that** each personalization module (4, 5) also generates a hash value of the registration data (7) during the personalization of a vehicle device (2) and writes it into the vehicle device (2), and the testing unit (11, 12) reads out this hash value from the vehicle device (2) along with the others and compares it during the aforementioned checking (12) to a hash value of the registration data (7) it received from the personalization module (4, 5).

3. Apparatus according to claim 1, **characterized in that** the apparatus (1) is a PoS terminal and each of the personalization modules (4, 5) is formed by the combination of a vehicle device type-specific personalization application (4) and a vehicle device type-specific communication interface (5) to the vehicle device (2).

4. Apparatus according to claim 3, **characterized in that** the communication interface (5) is a conventional DSRC or mobile phone interface.

5. Apparatus according to one of claims 1-4, **characterized in that** the testing unit (11, 12) is configured, for the purpose of_reading-out the personalization data (7), to prompt the vehicle device (2) to generate a standardized toll transaction of the road toll system, which transaction reproduces the personalization data (6).

6. Apparatus according to claim 5 in conjunction with claim 3 or 4, **characterized in that** the testing unit (11, 12) co-uses the communication interface (5) of a selected personalization module (4, 5).

7. Apparatus according to claim 5 in conjunction with claim 3, **characterized in that** the testing unit (11, 12) uses a transceiver beacon (11) of the road toll system for communication with the vehicle devices (2).

## Revendications

1. Dispositif (1) de personnalisation et d'enregistrement d'appareils de véhicule (2) de différents types dans un système de péage routier, **caractérisé par** :
un module de personnalisation (4, 5) pour chaque type d'appareil de véhicule, ledit module étant conçu pour écrire des données de personnalisation (6) dans un appareil de véhicule (2) de ce type et pour générer des données d'enregistrement associées (7) qui contiennent les données de personnalisation (6),
un module d'interface (8, 9) commun à tous les modules de personnalisation (4, 5), ledit module d'interface étant conçu pour recevoir les données d'enregistrement (7) des modules de personnalisation et pour les envoyer, en cas d'une sollicitation de libération (10), à une banque de données d'enregistrement (3) du système de péage routier, et
un dispositif de test (11, 12), lisant les données de personnalisation (6) d'un appareil de véhicule (2) personnalisé, non encore enregistré, vérifiant les données d'enregistrement (7) générées par le module de personnalisation (4, 5) approprié pour savoir si les données de personnalisation contenues dans les données d'enregistrement correspondent aux données de personnalisation (6) lues et, en cas de concordance, donnant au module d'interface (8, 9) une sollicitation de libération (10) en ce qui concerne ces données d'enregistrement (7).

2. Dispositif selon la revendication 1, **caractérisé en ce que**, lors de la personnalisation d'un appareil de véhicule (2), chaque module de personnalisation (4, 5) génère également une valeur de hachage des données d'enregistrement (7) et l'écrit dans l'appareil de véhicule (2), et **en ce que** le dispositif de test (11, 12) lit cette valeur de hachage depuis l'appareil de véhicule (2) et, lors de ladite vérification (12), la compare à une valeur de hachage des données d'enregistrement (7) reçues par le module de personnalisation (4, 5).

3. Dispositif selon la revendication 1 ou 2, **caractérisé en ce que** le dispositif (1) est un terminal de point de service et les modules de personnalisation (4, 5) sont formés chacun par la combinaison d'une application de personnalisation (4) propre au type d'appareil de véhicule et d'une interface de communication (5), propre au type d'appareil de véhicule, avec l'appareil de véhicule (2).

4. Dispositif selon la revendication 3, **caractérisé en ce que** l'interface de communication (5) est une interface de radiocommunication mobile ou DSCR connue en soi.

5. Dispositif selon l'une quelconque des revendications 1 à 4, **caractérisé en ce que** le dispositif de test (11, 12) est conçu pour faire en sorte que, pour la lecture des données de personnalisation (7), l'appareil de véhicule (2) génère une transaction de péage standardisée du système de péage routier, ladite transaction restituant les données de personnalisation (6).

6. Dispositif selon la revendication 5 en conjonction avec la revendication 3 ou 4, **caractérisé en ce que** le dispositif de test (11, 12) emploie également l'interface de communication (5) d'un module de personnalisation (4, 5) sélectionné.

7. Dispositif selon la revendication 5 en conjonction avec la revendication 3, **caractérisé en ce que** le dispositif de test (11, 12) emploie pour la communication avec les appareils de véhicule (2) une balise d'émission-réception (11) du système de péage routier.
